# FASCICULE DE BREVET EUROPEEN

(11) **EP 3 464 903 B1**
(45) Date de publication et mention de la délivrance du brevet: **24.06.2020**
(21) Numéro de dépôt: 17729389.1
(22) Date de dépôt: 17.05.2017
(51) Int. Cl.: F04C 25/02, F04C 18/12, F16C 3/00

(54) **STATOR, ARBRE ROTATIF, POMPE À VIDE DE TYPE SÈCHE ET PROCÉDÉS DE FABRICATION ASSOCIÉS**
STATOR, ROTIERENDE WELLE, TROCKENVAKUUMPUMPE UND ZUGEHÖRIGE HERSTELLUNGSVERFAHREN
STATOR, ROTATING SHAFT, DRY TYPE VACUUM PUMP AND ASSOCIATED PRODUCTION METHODS

(30) Priorité: 24.05.2016 FR 1654650
(43) Date de publication de la demande: 10.04.2019
(73) Titulaire: Pfeiffer Vacuum, 74000 Annecy (FR)
(72) Inventeur: MANDALLAZ, Eric, 74000 ANNECY (FR)
(74) Mandataire: Croonenbroek, Thomas Jakob
(86) Numéro de dépôt international: PCT/EP2017/061892
(87) Numéro de publication internationale: WO 2017/202673

(56) Documents cités:
- EP-A1- 2 902 124
- EP-A2- 1 519 045
- FR-A1- 2 597 376
- JP-A- S6 363 507
- US-A1- 2002 131 884
- US-A1- 2012 045 322

## Description

La présente invention concerne un stator de pompe à vide de type sèche. La présente invention concerne également un arbre rotatif configuré pour porter et entrainer en rotation au moins un rotor d'une pompe à vide. L'invention concerne également une pompe à vide de type sèche comportant au moins un tel stator et/ou au moins un tel arbre, telle qu'une pompe à vide de type « Roots » ou « Claw », ou encore de type à spirale ou à vis ou d'un autre principe similaire. L'invention concerne aussi un procédé de fabrication d'un tel stator et/ou arbre rotatif.

Certains procédés de fabrication, comme la fabrication des circuits intégrés, les cellules solaires photovoltaïques, les écrans plats d'affichage (Flat Panel Display en Anglais), les diodes electro-luminescentes pour l'éclairage (Light Emitting Diode en Anglais) comportent des étapes nécessitant d'évacuer des gaz réactifs corrosifs provenant des chambres de procédé. On utilise pour cela des pompes à vide de type sèche, dont l'entrée est raccordée à la chambre de procédé et la sortie est raccordée à des dispositifs de traitement de gaz, avant rejet des gaz traités dans l'atmosphère.

Le gaz aspiré à l'entrée de la pompe est emprisonné dans l'espace libre compris entre le stator et deux rotors tournant en sens inverse et, est refoulé à la sortie. Le fonctionnement s'effectue sans aucun contact mécanique entre les rotors et le stator mais via de très faibles jeux, ce qui permet l'absence totale d'huile.

Le stator et les rotors sont des pièces généralement réalisées en fonte.

Le document US2002/0131884 décrit un stator de pompe à vide sèche réalisé en partie en fonte fortement enrichie de nickel.

Les documents JPS6363507 et EP2902124 donnent des exemples de procédés de fabrication d'arbres en fonte.

Les surfaces de ces pièces peuvent se corroder sous l'action des gaz réactifs aspirés, tels que le fluor, le chlore et l'oxygène. Des couches de corrosion peuvent ainsi se former à la surface des pièces, ce qui peut réduire les jeux de fonctionnement entre les rotors et le stator, modifiant les performances de la pompe à vide, et dans le pire cas, conduire au grippage de la pompe.

Les fontes de type Ni-resist, enrichies en Nickel, présentent l'avantage d'être beaucoup plus résistantes à la corrosion et à l'oxydation que les fontes traditionnelles. Ce matériau ne peut toutefois pas se substituer aisément à la fonte classique pour réaliser les pièces de la pompe à vide, du fait de son cout très élevé et de ses moins bonnes performances mécaniques. Ce matériau est en outre difficile à usiner. De plus, le nickel est un élément dont la présence sur terre se raréfie et dont l'impact sur l'environnement est plus néfaste que celui des éléments des fontes classiques.

Une solution connue pour limiter l'emploi de ce matériau consiste à déposer sur la fonte classique, un revêtement de quelques dizaines de microns de Nickel par dépôt de couches minces.

L'application de cette solution dans le domaine des pompes à vide pose des problèmes inhérents à cette technologie.

En effet, le revêtement Nickel n'adhère pas suffisamment à la fonte classique. Au moindre petit choc ou touche du revêtement, ce dernier peut se rayer ou s'arracher localement. Le substrat en fonte classique sous le revêtement peut alors rapidement être exposé aux gaz corrosifs entrainant un décollement local de la couche superficielle de Nickel.

Par ailleurs, l'écaille métallique ôtée du revêtement peut se ressouder sur d'autres surfaces de Nickel, ailleurs dans le corps de la pompe à vide, risquant de gripper la pompe ultérieurement.

D'autres types de fontes ou de revêtements ont également été envisagés pour constituer le matériau des rotors et du stator, comme des alliages de fonte ductile à base de Molybdène et Silicium (SiMo) ou fonte ADI (pour « Austempered Ductile Iron » en anglais) ou des revêtements polymères tels que de type téflon, ces solutions n'étant toutefois pas réellement satisfaisantes notamment du fait de la mauvaise accroche du revêtement ou du coût de ces matériaux.

La présente invention a pour but de remédier au moins partiellement aux inconvénients précités.

Un des buts de l'invention est de fournir une pompe à vide résistante face aux gaz corrosifs, qui ne soit pas trop couteuse et qui présente une bonne résistance mécanique.

A cet effet, l'invention a pour objet un stator de pompe à vide de type sèche, la pompe à vide comportant au moins deux rotors aptes à tourner de façon synchronisée en sens inverse dans un logement central du stator pour entraîner un gaz à pomper entre une entrée d'admission et une sortie de refoulement du stator, caractérisé en ce que le stator comporte :
- une partie externe de stator réalisée en fonte comportant moins de 5% de Nickel, comme par exemple moins de 1% de Nickel, et
- un insert de stator dans lequel est ménagé le logement central configuré pour recevoir les rotors de la pompe à vide, l'insert de stator comportant au moins 10% de Nickel, tel qu'au moins 30% de Nickel, comme par exemple au moins 35% de Nickel,
- la partie externe de stator ayant été coulée sur l'insert de stator.

Deux parties massives de différents matériaux forment ainsi le stator. Le cœur du stator qui est susceptible d'entrer en contact avec les gaz corrosifs est alors formé dans un matériau plus résistant à la corrosion. Le matériau de la partie externe en revanche présente une meilleure tenue mécanique. La pompe à vide est ainsi plus résistante face aux gaz corrosifs tout en présentant une bonne tenue mécanique. De plus, l'utilisation du Nickel est limitée car ciblée.

En coulant la fonte comportant moins de 5% de Nickel sur l'insert de stator, on fusionne localement la partie externe de stator et l'insert de stator. On réalise donc dès la coulée, une liaison métallurgique intime entre l'insert de stator et la partie externe de stator. Cela permet de résoudre le problème des différents comportements thermomécaniques des deux matériaux. La liaison métallurgique est alors extrêmement résistante mécaniquement. Cette liaison métallurgique forte rend impossible un « déchaussage » des deux parties.

Selon une ou plusieurs caractéristiques du stator, prise seule ou en combinaison :
- la partie externe de stator entoure l'insert de stator,
- au moins une canalisation inter-étage en communication avec le logement central est au moins partiellement ménagée dans l'insert de stator,
- l'insert de stator est un alliage, tel qu'une fonte, telle qu'une fonte à graphite sphéroïdale, comportant au moins 10% de Nickel, tel que comportant au moins 30% de Nickel,
- l'insert de stator est en Nickel, c'est-à-dire comporte sensiblement 100% de Nickel,
- la partie externe de stator est une fonte, telle qu'une fonte à graphite sphéroïdale,
- la paroi externe de l'insert de stator est dépourvue de filetages, rainurages, moletages ou autres reliefs d'accroche.

L'invention a aussi pour objet une pompe à vide de type sèche comportant au moins un étage de pompage pour entrainer un gaz à pomper entre une entrée d'admission et une sortie de refoulement, caractérisée en ce qu'elle comporte au moins un stator tel que décrit précédemment.

La pompe à vide peut comporter une pluralité d'étages de pompage montés en série. Le au moins un étage de pompage comportant un stator tel que décrit précédemment, peut être situé du côté du refoulement de la pompe à vide.

Selon une ou plusieurs caractéristiques de la pompe à vide, prise seule ou en combinaison :
- la pompe à vide comporte en outre un arbre rotatif configuré pour porter et entrainer en rotation au moins un rotor, l'arbre rotatif comportant :
   - un insert d'arbre réalisé en fonte comportant moins de 5% de Nickel, et
   - une partie externe d'arbre destinée à porter au moins un rotor de la pompe à vide, la partie externe d'arbre comportant au moins 10% de Nickel,
   - l'insert d'arbre ayant été coulé dans la partie externe d'arbre,
- la partie externe d'arbre entoure radialement l'insert d'arbre,
- l'épaisseur radiale de la partie externe d'arbre est supérieure à 0,5 centimètres.

L'invention a également pour objet un procédé de fabrication d'un stator de pompe à vide de type sèche, caractérisé en ce qu'il comporte les étapes suivantes :
- on forme d'abord un insert de stator comportant au moins 10% de Nickel, tel qu'au moins 30% de Nickel, comme par exemple au moins 35% de Nickel,
- puis on coule sur l'insert de stator, une partie externe de stator en fonte comportant moins de 5% de Nickel, comme par exemple moins de 1% de Nickel.

Selon une ou plusieurs caractéristiques du procédé de fabrication d'un stator de pompe à vide de type sèche, prise seule ou en combinaison :
- la partie externe de stator est une fonte ferritique à graphite sphéroïdale dont la température de coulée est supérieure à 1300°C,
- avant le moulage de la fonte comportant moins de 5% de Nickel, la rugosité de la paroi externe de l'insert de stator est comprise entre 6 et 12 micromètres.

L'invention a aussi pour objet un arbre rotatif pour pompe à vide de type sèche comportant au moins un stator et au moins deux rotors aptes à tourner de façon synchronisée en sens inverse dans le stator pour entraîner un gaz à pomper entre une entrée d'admission et une sortie de refoulement, l'arbre rotatif étant configuré pour porter et entrainer en rotation au moins un rotor, caractérisé en ce que l'arbre rotatif comporte :
- un insert d'arbre réalisé en fonte comportant moins de 5% de Nickel, comme par exemple moins de 1% de Nickel, et
- une partie externe d'arbre destinée à porter au moins un rotor de la pompe à vide, la partie externe d'arbre comportant au moins 10% de Nickel, tel qu'au moins 30% de Nickel, comme par exemple au moins 35% de Nickel,
- l'insert d'arbre ayant été coulé dans la partie externe d'arbre.

Une telle partie externe d'arbre, massive, permet d'éviter que les gaz corrosifs accèdent à la fonte classique en cas de chocs mécaniques à la surface de l'arbre. Au contraire, en cas d'impacts, les gaz corrosifs continuent d'être au contact avec l'alliage enrichi en Nickel ou le Nickel. La partie externe d'arbre peut ainsi subir de petits chocs et abrasions sans abaisser son niveau de protection face aux gaz corrosifs. Par ailleurs, grâce à cet aspect massif de la partie externe d'arbre, il est possible de reprendre par usinage les parties éventuellement endommagées au cours des maintenances de la pompe à vide.

Selon une ou plusieurs caractéristiques de l'arbre, prise seule ou en combinaison :
- la partie externe d'arbre entoure radialement l'insert d'arbre,
- l'épaisseur radiale de la partie externe d'arbre est supérieure à 0,5 centimètres,
- la partie externe d'arbre est un alliage, tel qu'une fonte, telle qu'une fonte à graphite sphéroïdale, comportant au moins 10% de Nickel, tel que comportant au moins 30% de Nickel, comme par exemple comportant au moins 35% de Nickel,
- la partie externe d'arbre est en Nickel, c'est-à-dire comporte sensiblement 100% de Nickel,
- l'insert d'arbre est une fonte, telle qu'une fonte à graphite sphéroïdale,
- la paroi interne de la partie externe d'arbre est dépourvue de filetages, rainurages, moletages ou autres reliefs d'accroche.

L'invention a aussi pour objet une pompe à vide de type sèche comportant au moins un étage de pompage pour entrainer un gaz à pomper entre une entrée d'admission et une sortie de refoulement, caractérisée en ce qu'elle comporte au moins un arbre rotatif tel que décrit précédemment.

D'autres caractéristiques et avantages de l'invention ressortiront de la description suivante, donnée à titre d'exemple, sans caractère limitatif, en regard des dessins annexés sur lesquels:
La figure 1 représente une vue schématique d'éléments d'une pompe à vide de type sèche multi-étagée de type Roots.
La figure 2 montre une vue schématique en coupe transversale d'un étage de pompage de la pompe à vide de la figure 1.
La figure 3 montre une vue schématique en coupe longitudinale d'un stator de l'étage de pompage de la figure 2.
La figure 4 montre une photographie issue d'un examen métallographique d'un échantillon pris au niveau d'une zone de fusion entre une partie externe de stator et un insert de stator.
La figure 5 montre différentes étapes d'un procédé de fabrication d'un stator ou d'un arbre rotatif.

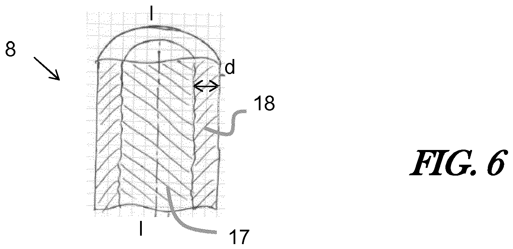

La figure 6 montre une vue partielle, schématique et en coupe longitudinale d'un arbre rotatif de la pompe à vide de la figure 1.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

L'invention s'applique à tout type de pompe à vide de type sèche comportant un ou plusieurs étages, telle qu'une pompe à vide de type « Roots », une pompe à vide à double bec ou « Claw » ou de type à spirale ou à vis ou d'un autre principe similaire, notamment utilisées dans certains procédés de fabrication, comme la fabrication des circuits intégrés, les cellules solaires photovoltaïques, les écrans plats d'affichage (Flat Panel Display en Anglais), les diodes electro-luminescentes pour l'éclairage (Light Emitting Diode en Anglais), ces procédés comportant des étapes nécessitant d'évacuer des gaz réactifs corrosifs de chambres de procédé, l'entrée de la pompe à vide étant raccordée à la chambre de procédé et la sortie étant raccordée à des dispositifs de traitement de gaz, avant rejet des gaz traités dans l'atmosphère.

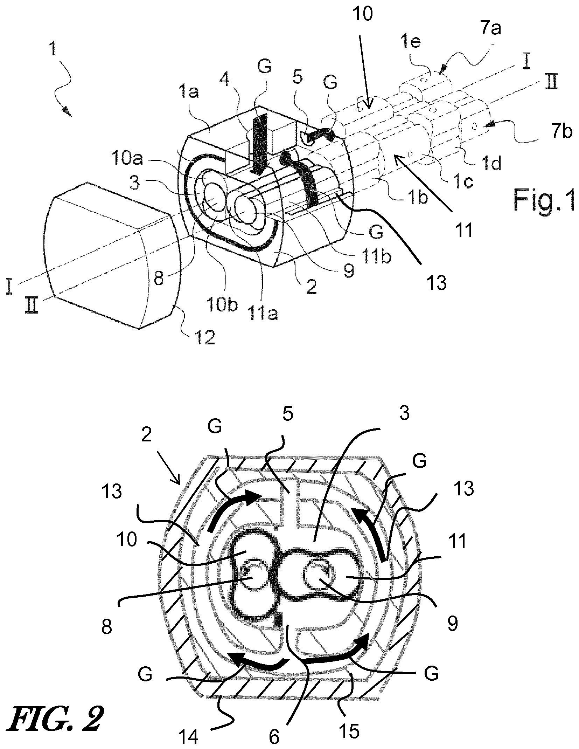

La figure 1 illustre ainsi un exemple de réalisation d'une pompe à vide 1 sèche multi-étagée de type Roots. Pour faciliter la compréhension, seuls les éléments nécessaires au fonctionnement de la pompe ont été représentés.

La pompe à vide 1 comporte cinq étages de pompage 1a, 1b, 1c, 1d et 1e, chaque étage 1a-1e comportant un stator 2, dont seuls les trois quarts de celui du premier étage 1a sont représentés sur la figure 1. Les stators 2 sont assemblés entre eux par exemple par des vis de fixation, pour former un corps monobloc de la pompe à vide 1.

Les étages de pompage 1a-1e sont placés en série les uns à la suite des autres et raccordés en série les uns à la suite des autres par des canalisations inter-étages 13 qui sont ici agencées latéralement.

Comme on peut le voir sur la représentation schématique de la figure 2, les canalisations inter-étages 13 sont ménagées dans le corps du stator 2. Elles raccordent la sortie de refoulement 6 d'un logement central 3 d'un étage de pompage à l'entrée 5 de l'étage qui suit. Il y a par exemple deux canalisations inter-étage 13 par étage de pompage 1a-1e, raccordées en parallèle entre la sortie 6 et l'entrée 5 et agencées de part et d'autre du logement central 3.

La pompe 1 comporte également deux ensembles de rotors 7a, 7b comportant respectivement un arbre 8, 9 rotatif.

Les arbres 8, 9 sont montés en parallèle et s'étendent dans les étages de pompage 1a-1e. Ils sont entraînés en rotation autour d'un axe de rotation respectif I-I et II-II par un moteur et peuvent être montés sur paliers à billes portés par des flasques 12 situés aux extrémités de la pompe à vide 1 (une seule est représentée).

Chaque arbre 8, 9 porte un rotor 10, 11 dans chaque étage de pompage 1a-1e. Chaque rotor 10, 11 est par exemple formé par deux demi-lobes rotatifs 10a, 10b et 11a, 11b rapportés et fixés sur les arbres respectifs 8, 9, par des vis d'assemblage (figure 1).

Les rotors 10, 11 présentent des profils identiques, présentant par exemple chacun une section transversale de forme générale en huit (figure 2). Les rotors 10, 11 sont angulairement décalés et entrainés pour tourner de façon synchronisée en sens inverse dans le logement central 3 de chaque étage.

Lors de la rotation des rotors 10, 11, le gaz aspiré depuis une entrée d'admission 4, 5 du stator 2 est emprisonné dans l'espace libre compris entre les rotors 10, 11 et le stator 2, puis est entrainé par les rotors 10, 11 vers l'étage suivant en remontant dans les canalisations inter-étages 13 latérales pour rejoindre l'entrée 5 agencée en partie supérieure de l'étage de pompage suivant. Après le dernier étage de pompage 1e, les gaz aspirés sont entrainés vers le refoulement général de la pompe 1 (le sens de circulation des gaz est illustré par les flèches G sur les figures 1 et 2).

La pompe à vide 1 est dite « sèche » car en fonctionnement, les rotors 10, 11 tournent à l'intérieur du stator 2 sans aucun contact mécanique, ce qui permet l'absence d'huile dans les logements 3.

Au moins un stator 2 de la pompe à vide 1 et/ou au moins un arbre rotatif 8, 9, de la pompe 1 est réalisé au moyen de deux matériaux différents, tel que deux types de fontes, coulées en deux étapes successives.

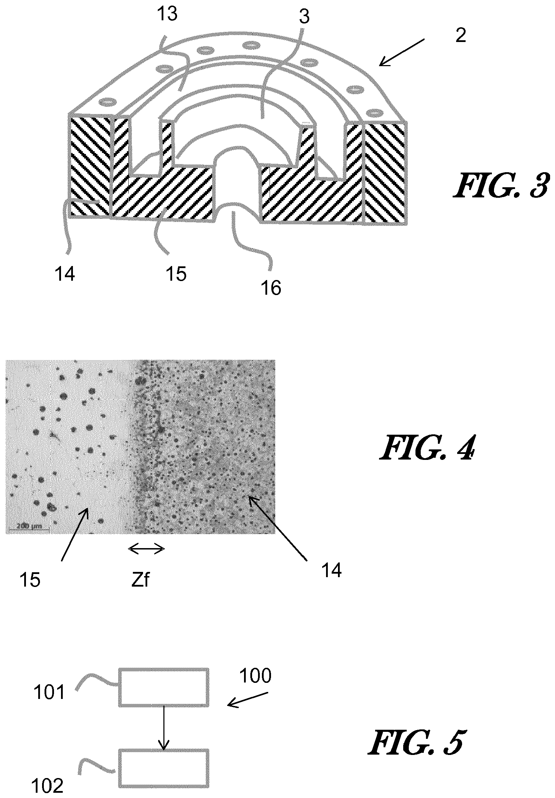

Ainsi, et en référence aux figures 2 et 3, au moins un stator 2 de la pompe à vide 1 comporte une partie externe de stator 14 et un insert de stator 15.

La partie externe de stator 14 est réalisée en fonte comportant moins de 5% de Nickel, telle que comprenant une teneur en Nickel inférieure à 1%. C'est par exemple une fonte à graphite sphéroïdale, telle qu'une fonte ferritique également appelée fonte FGS, telle que la fonte FGS 400-15 ou telle qu'une fonte ferrito-perlitique. Selon un autre exemple, la fonte comportant moins de 5% de Nickel est une fonte ductile à base de Molybdène et Silicium (également appelée SiMo). Ces types de fonte, classiques, non-enrichies en Nickel, présentent une bonne résistance mécanique.

L'insert de stator 15 comporte au moins 10% de Nickel, tel que au moins 30% ou 35% de Nickel, voire au moins 90%, tel que 100% de Nickel.

C'est par exemple un alliage, tel qu'une fonte enrichie en Nickel, c'est-à-dire un alliage comprenant au moins du Fer, du Carbone et du Nickel.

La fonte enrichie en Nickel peut être une fonte austénitique à graphite sphéroïdale, également appelée fonte FGS Ni-resist. Cette fonte enrichie en Nickel est plus résistante à la corrosion que la fonte formant la partie externe de stator 14 qui comporte du Nickel à l'état de traces, c'est-à-dire en quantité inférieure à 5%, tel que de l'ordre de 0,02%.

Selon un autre exemple, la fonte comportant au moins 10% de Nickel est une fonte austénitique à graphite lamellaire, comportant par exemple une teneur en Nickel comprise entre 10 et 20%, telle que de l'ordre de 13, 7%.

Outre le Fer et le Nickel, les fontes enrichies en Nickel et les fontes non enrichies en Nickel comportent au moins 1% de Silicium et au moins 1% de Carbone. Ces fontes peuvent également comporter du Manganèse, du Soufre, du Phosphore, du Cuivre, du Molybdène et du Chrome, notamment en quantité inférieure à 10%.

Selon un autre exemple, l'insert de stator 15 est un alliage comportant au moins 90% de Nickel.

Selon un autre exemple, l'insert de stator 15 est en Nickel, c'est-à-dire comporte sensiblement 100% de Nickel.

Deux parties massives de différents matériaux forment ainsi le stator 2. Le cœur du stator 2 qui est susceptible d'entrer en contact avec les gaz corrosifs est alors formé dans un matériau plus résistant à la corrosion. Le matériau de la partie externe 14 en revanche présente une meilleure tenue mécanique. La pompe à vide est ainsi plus résistante face aux gaz corrosifs tout en présentant une bonne tenue mécanique. De plus, l'utilisation du Nickel est limitée car ciblée.

La partie externe de stator 14 peut entourer l'insert de stator 15, ce qui permet de garantir une bonne résistance mécanique, notamment face à une surpression ou explosion dans la pompe 1. La partie externe de stator 14 présente ainsi par exemple une forme générale de couronne.

On peut profiter de la meilleure tenue mécanique de la partie externe de stator 14 pour agencer des éléments de fixation du stator 2 à un autre stator, tels que des trous taraudés, dans la partie externe de stator 14. Le logement central 3 recevant les rotors 10, 11 et les orifices 16 de passages d'arbres 8, 9, débouchant dans le logement central 3, sont ménagés dans l'insert de stator 15 (figure 3).

Au moins une canalisation inter-étage 13 en communication avec le logement central 3 peut être également au moins partiellement ménagée dans l'insert de stator 15. Dans cet exemple, les deux canalisations inter-étage 13 latérales sont entièrement ménagées dans l'insert de stator 15. Selon un autre exemple de réalisation non représenté, les canalisations inter-étage en communication avec le logement central 3 sont interposées entre deux étages de pompage successifs dans la direction axiale des arbres 8, 9.

Les surfaces du logement central 3 et des canalisations inter-étage 13 en contact avec les gaz corrosifs pompés, présentent ainsi une bonne résistance à la corrosion. Un tel insert de stator 15, massif, permet d'assurer la protection contre les agressions des gaz corrosifs même en cas d'endommagement de la paroi superficielle, les gaz corrosifs continuant d'être en contact avec l'alliage enrichi en Nickel ou avec le Nickel. Par ailleurs, grâce à cet aspect massif de l'insert de stator 15, il est possible de reprendre par usinage les parties éventuellement endommagées lors des maintenances de la pompe à vide 1.

Un seul stator 2 de la pompe à vide 1 peut ainsi être réalisé. Il s'agit alors de préférence du stator 2 du dernier étage de pompage 1e, situé du côté du refoulement de la pompe à vide 1. Dans le cas où plusieurs stators 2 sont ainsi réalisés, il s'agit de ceux d'étages de pompage adjacents dans la série, situés du côté du refoulement de la pompe à vide 1, tels que ceux des deux ou trois derniers étages de pompage 1c, 1d, 1e. En effet, les étages de pompage situés côté refoulement sont ceux qui présentent les pressions les plus élevées et donc les risques de corrosion les plus importants.

Tous les stators 2 de tous les étages de pompage 1a-1e peuvent également être ainsi obtenus.

Au cours du procédé de fabrication du stator 100, on forme d'abord un insert de stator 15 comportant au moins 10% de Nickel (étape 101, figure 5), puis on coule sur l'insert de stator 15, une partie externe de stator 14 en fonte comportant moins de 5% de Nickel (étape 102).

En coulant la fonte non enrichie en Nickel sur l'insert de stator 15, on fusionne localement la partie externe de stator 14 et l'insert de stator 15 sur une zone de fusion Zf d'environ 200 micromètres (voir figure 4). On réalise donc lors de la coulée, une liaison métallurgique intime entre l'insert de stator 15 et la partie externe de stator 14. Cela permet de résoudre le problème des différents comportements thermomécaniques des deux matériaux. La liaison métallurgique est alors extrêmement résistante mécaniquement. Cette liaison métallurgique forte rend impossible un « déchaussage » des deux parties 14, 15.

Dans le cas pour lequel une fonte ferritique à graphite sphéroïdale forme la partie externe de stator 14, la température de coulée de la fonte ferritique à graphite sphéroïdale peut être supérieure à 1300°C, telle que comprise entre 1300°C et 1600°C, et de préférence comprise entre 1300°C et 1400°C. Le surmoulage par la partie externe de stator 14 peut apporter l'énergie permettant de participer au traitement thermique de l'insert de stator 15.

Avant le moulage de la partie externe de stator 14, les surfaces externes de l'insert de stator 15 sont préparées afin d'ôter les résidus (grains de sable ou autres) de moule et/ou de noyau de sorte que la rugosité de la paroi externe de l'insert de stator 15 soit par exemple comprise entre 6 et 12 micromètres, ce qui correspond à un état de surface grossier. Les inventeurs ont en effet constaté qu'un tel état de surface permettait d'obtenir de meilleurs résultats, ce qui est contre-intuitif.

Egalement, la paroi externe de l'insert de stator 15 est avantageusement dépourvue de filetages, rainurages, moletages ou autres reliefs d'accroche, qui pourraient former des trous ou lames d'air fragilisant la qualité de la liaison métallurgique entre la partie externe de stator 14 et l'insert de stator 15.

Par ailleurs, au moins un arbre rotatif 8, 9 de la pompe à vide 1 peut être formé de deux types de matériaux différents, tel que de deux types de fonte.

Ainsi, au moins un arbre rotatif 8, 9 comporte un insert d'arbre 17 en fonte comportant moins de 5% de Nickel et une partie externe d'arbre 18 comportant au moins 10% de Nickel (figure 7).

L'insert d'arbre 17 réalisé en fonte comportant moins de 5% de Nickel, telle que comprenant une teneur en Nickel inférieure à 1%, est par exemple une fonte ferritique à graphite sphéroïdale.

La partie externe d'arbre 18 comportant au moins 10% de Nickel, telle que comprenant au moins 30% ou 35% de Nickel, voire au moins 90%, peut être, comme décrit précédemment pour l'insert de stator 15, un alliage tel qu'une fonte, comme une fonte austénitique à graphite sphéroïdale ou peut être du Nickel à 100%.

La partie externe d'arbre 18 est destinée à porter au moins un rotor 10, 11, tel que de type Roots, ou présentant d'autres formes, tel qu'une partie filetée de pompe à vis.

La partie externe d'arbre 18 peut être susceptible d'entrer en contact avec les gaz corrosifs. C'est donc cette partie de l'arbre 8 qui est formée dans un matériau plus résistant à la corrosion. Le matériau de l'insert d'arbre 17 présente une meilleure tenue mécanique, permettant notamment de garantir une bonne tenue en flexion.

L'insert d'arbre 17 est coulé dans la partie externe d'arbre 18.

Pour cela, on forme d'abord une partie externe d'arbre 18 de forme générale tubulaire comportant au moins 10% de Nickel (étape 101, figure 5), puis on coule dans la partie externe d'arbre 18, un insert d'arbre 17 en fonte comportant moins de 5% de Nickel (étape 102).

La partie externe d'arbre 18 peut entourer radialement l'insert d'arbre 17. La partie externe d'arbre 18 sert ainsi de moule pour l'insert d'arbre 17 au cours de la fabrication de l'arbre 8, 9.

Comme pour le stator 2, dans le cas où une fonte ferritique à graphite sphéroïdale forme l'insert d'arbre 17, la température de coulée de la fonte ferritique à graphite sphéroïdale peut être supérieure à 1300°C, telle que comprise entre 1300°C et 1600°C et de préférence comprise entre 1300°C et 1400°C.

En outre, avant le moulage de l'insert d'arbre 17, la rugosité de la paroi interne de la partie externe d'arbre 18 est par exemple comprise entre 6 et 12 micromètres. Egalement, la paroi interne de la partie externe d'arbre 18 est avantageusement dépourvue de filetages, rainurages, moletages ou autres reliefs d'accroche.

L'épaisseur radiale d de la partie externe d'arbre 18, peut être supérieure à 0,5 cm, telle que comprise entre 0,6cm et 2cm, ce qui est relativement important comparé aux quelques microns du revêtement de l'art antérieur déposé par couches minces. Une telle partie externe d'arbre 18, massive, permet d'éviter que les gaz corrosifs accèdent à la fonte classique en cas de chocs mécaniques à la surface de l'arbre 8, 9. Au contraire, en cas d'impacts, les gaz corrosifs continuent d'être au contact de l'alliage enrichi en Nickel ou du Nickel. La partie externe d'arbre 18 peut ainsi subir de petits chocs et abrasions sans abaisser son niveau de protection face aux gaz corrosifs. Par ailleurs, grâce à cet aspect massif de la partie externe d'arbre 18, il est possible de reprendre par usinage les parties éventuellement endommagées au cours des maintenances de la pompe à vide 1.

La pompe à vide 1 comporte par exemple deux arbres rotatifs 8, 9 ainsi réalisés et deux ou trois stators 2 côté refoulement ainsi réalisés.

Les rotors 10, 11, de petit volume, peuvent être entièrement réalisés en alliage enrichi en Nickel, telle qu'en fonte comprenant au moins 10% ou 30% ou 35% de Nickel, comme une fonte austénitique à graphite sphéroïdale ou entièrement réalisés en Nickel.

On limite ainsi la formation de couches de corrosion dans les jeux fonctionnels entre les stators 2 et les rotors 10, 11 pouvant être à l'origine de dysfonctionnements de la pompe à vide 1. Une pompe à vide 1 ainsi obtenue est plus résistante aux gaz corrosifs, n'est pas trop couteuse et présente une bonne résistance mécanique.

## Revendications

1. Stator (2) de pompe à vide de type sèche (1), la pompe à vide (1) comportant au moins deux rotors (10, 11) aptes à tourner de façon synchronisée en sens inverse dans un logement central (3) du stator (2) pour entraîner un gaz à pomper entre une entrée d'admission (4, 5) et une sortie de refoulement (6) du stator (2), **caractérisé en ce que** le stator (2) comporte :
- une partie externe de stator (14) réalisée en fonte comportant moins de 5% de Nickel, et
- un insert de stator (15) dans lequel est ménagé le logement central (3) configuré pour recevoir les rotors (10, 11) de la pompe à vide (1), l'insert de stator (15) comportant au moins 10% de Nickel,
- la partie externe de stator (14) ayant été coulée sur l'insert de stator (15).

2. Stator (2) selon la revendication précédente, **caractérisé en ce que** la partie externe de stator (14) entoure l'insert de stator (15).

3. Stator (2) selon l'une des revendications précédentes, **caractérisé en ce qu'**au moins une canalisation inter-étage (13) en communication avec le logement central (3) est au moins partiellement ménagée dans l'insert de stator (15).

4. Stator (2) selon l'une des revendications précédentes, **caractérisé en ce que** l'insert de stator (15) est un alliage, tel qu'une fonte, telle qu'une fonte à graphite sphéroïdale, comportant au moins 10% de Nickel, tel que comportant au moins 30% de Nickel.

5. Stator (2) selon l'une des revendications 1 à 3, **caractérisé en ce que** l'insert de stator (15) est en Nickel.

6. Stator (2) selon l'une des revendications précédentes, **caractérisé en ce que** la partie externe de stator (14) est une fonte, telle qu'une fonte à graphite sphéroïdale.

7. Pompe à vide (1) de type sèche comportant au moins un étage de pompage (1a, 1b, 1c, 1d, 1e) pour entrainer un gaz à pomper entre une entrée d'admission (4, 5) et une sortie de refoulement (6), **caractérisée en ce qu'**elle comporte au moins un stator (2) selon l'une des revendications précédentes.

8. Procédé de fabrication (100) d'un stator (2) de pompe à vide (1) de type sèche, **caractérisé en ce qu'**il comporte les étapes suivantes :
- on forme d'abord un insert de stator (15) comportant au moins 10% de Nickel (étape 101),
- puis on coule sur l'insert de stator (15), une partie externe de stator (14) en fonte comportant moins de 5% de Nickel (étape 102).

9. Arbre rotatif (8, 9) pour pompe à vide (1) de type sèche comportant au moins un stator (2) et au moins deux rotors (10, 11) aptes à tourner de façon synchronisée en sens inverse dans le stator (2) pour entraîner un gaz à pomper entre une entrée d'admission (4, 5) et une sortie de refoulement (6), l'arbre rotatif (8, 9) étant configuré pour porter et entrainer en rotation au moins un rotor (10, 11), **caractérisé en ce que** l'arbre rotatif (8, 9) comporte :
- un insert d'arbre (17) réalisé en fonte comportant moins de 5% de Nickel, et
- une partie externe d'arbre (18) destinée à porter au moins un rotor (10, 11) de la pompe à vide (1), la partie externe d'arbre (18) comportant au moins 10% de Nickel,
- l'insert d'arbre (17) ayant été coulé dans la partie externe d'arbre (18).

10. Arbre rotatif (8, 9) selon la revendication précédente, **caractérisé en ce que** la partie externe d'arbre (18) entoure radialement l'insert d'arbre (17).

11. Arbre rotatif (8, 9) selon l'une des revendications 9 ou 10, **caractérisé en ce que** la partie externe d'arbre (18) est un alliage, tel qu'une fonte, telle qu'une fonte à graphite sphéroïdale, comportant au moins 10% de Nickel, tel que comportant au moins 30% de Nickel.

12. Arbre rotatif (8, 9) selon l'une des revendications 9 à 11, **caractérisé en ce que** la partie externe d'arbre (18) est en Nickel.

13. Arbre rotatif (8, 9) selon l'une des revendications 9 à 12, **caractérisé en ce que** l'insert d'arbre (17) est une fonte, telle qu'une fonte à graphite sphéroïdale.

14. Pompe à vide (1) de type sèche comportant au moins un étage de pompage (1a, 1b, 1c, 1d, 1e) pour entrainer un gaz à pomper entre une entrée d'admission (4, 5) et une sortie de refoulement (6), **caractérisée en ce qu'**elle comporte au moins un arbre rotatif (8, 9) selon l'une des revendications 9 à 13.

## Patentansprüche

1. Stator (2) einer Trockenvakuumpumpe (1), wobei die Vakuumpumpe (1) wenigstens zwei Rotoren (10, 11) aufweist, die geeignet sind, in einem zentralen Aufnahmeraum (3) des Stators (2) synchron in entgegengesetzter Richtung zu rotieren, um ein zu pumpendes Gas zwischen einem Ansaugeinlass (4, 5) und einem Druckauslass (6) des Stators (2) zu leiten, **dadurch gekennzeichnet, dass** der Stator (2) aufweist:
- einen äußeren Statorteil (14), der aus Guss hergestellt ist, der weniger als 5 % Nickel enthält, und
- einen Statoreinsatz (15), in welchem der zentrale Aufnahmeraum (3) ausgebildet ist, der dafür ausgelegt ist, die Rotoren (10, 11) der Vakuumpumpe (1) aufzunehmen, wobei der Statoreinsatz (15) mindestens 10 % Nickel enthält,
- wobei der äußere Statorteil (14) auf den Statoreinsatz (15) aufgegossen ist.

2. Stator (2) nach dem vorhergehenden Anspruch, **dadurch gekennzeichnet, dass** der äußere Statorteil (14) den Statoreinsatz (15) umgibt.

3. Stator (2) nach einem der vorhergehenden Ansprüche, **dadurch gekennzeichnet, dass** wenigstens ein Zwischenstufenkanal (13), der mit dem zentralen Aufnahmeraum (3) in Verbindung steht, wenigstens teilweise im Statoreinsatz (15) ausgebildet ist.

4. Stator (2) nach einem der vorhergehenden Ansprüche, **dadurch gekennzeichnet, dass** der Statoreinsatz (15) aus einer Legierung besteht, wie etwa einem Guss, wie etwa einem Kugelgraphitguss, der mindestens 10 % Nickel enthält, wie etwa mindestens 30 % Nickel enthält.

5. Stator (2) nach einem der Ansprüche 1 bis 3, **dadurch gekennzeichnet, dass** der Statoreinsatz (15) aus Nickel besteht.

6. Stator (2) nach einem der vorhergehenden Ansprüche, **dadurch gekennzeichnet, dass** der äußere Statorteil (14) aus einem Guss besteht, wie etwa einem Kugelgraphitguss.

7. Trockenvakuumpumpe (1), welche wenigstens eine Pumpstufe (1a, 1b, 1c, 1d, 1e) zum Leiten eines zu pumpenden Gases zwischen einem Ansaugeinlass (4, 5) und einem Druckauslass (6) umfasst, **dadurch gekennzeichnet, dass** sie wenigstens einen Stator (2) nach einem der vorhergehenden Ansprüche aufweist.

8. Verfahren zur Herstellung (100) eines Stators (2) einer Trockenvakuumpumpe (1), **dadurch gekennzeichnet, dass** es die folgenden Schritte umfasst:
- Zuerst wird ein Statoreinsatz (15) ausgebildet, der mindestens 10 % Nickel enthält (Schritt 101),
- anschließend wird auf den Statoreinsatz (15) ein äußerer Statorteil (14) aufgegossen, der weniger als 5 % Nickel enthält (Schritt 102).

9. Rotierende Welle (8, 9) für eine Trockenvakuumpumpe (1), welche wenigstens einen Stator (2) und wenigstens zwei Rotoren (10, 11), die geeignet sind, synchron in entgegengesetzter Richtung im Stator (2) zu rotieren, um ein zu pumpendes Gas zwischen einem Ansaugeinlass (4, 5) und einem Druckauslass (6) zu leiten, aufweist, wobei die rotierende Welle (8, 9) dafür ausgelegt ist, wenigstens einen Rotor (10, 11) zu tragen und drehend anzutreiben, **dadurch gekennzeichnet, dass** die rotierende Welle (8, 9) aufweist:
- einen Welleneinsatz (17), der aus Guss hergestellt ist, der weniger als 5 % Nickel enthält, und
- einen äußeren Wellenteil (18), der dazu bestimmt ist, wenigstens einen Rotor (10, 11) der Vakuumpumpe (1) zu tragen, wobei der äußere Wellenteil (18) mindestens 10 % Nickel enthält,
- wobei der Welleneinsatz (17) in den äußeren Wellenteil (18) eingegossen ist.

10. Rotierende Welle (8, 9) nach dem vorhergehenden Anspruch, **dadurch gekennzeichnet, dass** der äußere Wellenteil (18) den Welleneinsatz (17) radial umgibt.

11. Rotierende Welle (8, 9) nach einem der Ansprüche 9 oder 10, **dadurch gekennzeichnet, dass** der äußere Wellenteil (18) aus einer Legierung besteht, wie etwa einem Guss, wie etwa einem Kugelgraphitguss, der mindestens 10 % Nickel enthält, wie etwa mindestens 30 % Nickel enthält.

12. Rotierende Welle (8, 9) nach einem der Ansprüche 9 bis 11, **dadurch gekennzeichnet, dass** der äußere Wellenteil (18) aus Nickel besteht.

13. Rotierende Welle (8, 9) nach einem der Ansprüche 9 bis 12, **dadurch gekennzeichnet, dass** der Welleneinsatz (17) aus einem Guss besteht, wie etwa einem Kugelgraphitguss.

14. Trockenvakuumpumpe (1), welche wenigstens eine Pumpstufe (1a, 1b, 1c, 1d, 1e) zum Leiten eines zu pumpenden Gases zwischen einem Ansaugeinlass (4, 5) und einem Druckauslass (6) umfasst, **dadurch gekennzeichnet, dass** sie wenigstens eine rotierende Welle (8, 9) nach einem der Ansprüche 9 bis 13 umfasst.

## Claims

1. Stator (2) of a dry vacuum pump (1), the vacuum pump (1) having at least two rotors (10, 11) capable of rotating in a synchronized manner in opposite directions in a central housing (3) of the stator (2) to drive a gas to be pumped between a suction inlet (4, 5) and a delivery outlet (6) of the stator (2), **characterized in that** the stator (2) comprises:
- an outside part of the stator (14) made of cast iron containing less than 5% nickel, and
- a stator insert (15) wherein is arranged the central housing (3) configured to receive the rotors (10, 11) of the vacuum pump (1), the stator insert (15) containing at least 10% nickel,
- the outside part of the stator (14) having been cast on the stator insert (15).

2. Stator (2) according to the preceding claim, **characterized in that** the outside part of the stator (14) surrounds the stator insert (15).

3. Stator (2) according to either of the preceding claims, **characterized in that** at least one interstage duct (13) communicating with the central housing (3) is at least partially arranged in the stator insert (15).

4. Stator (2) according to one of the preceding claims, **characterized in that** the stator insert (15) is an alloy, such as a cast iron, such as a spheroidal graphite cast iron, containing at least 10% nickel, such as containing at least 30% nickel.

5. Stator (2) according to one of Claims 1 to 3, **characterized in that** the stator insert (15) is made of nickel.

6. Stator (2) according to one of the preceding claims, **characterized in that** the outside part of the stator (14) is a cast iron, such as a spheroidal graphite cast iron.

7. Dry vacuum pump (1) having at least one pumping stage (1a, 1b, 1c, 1d, 1e) to drive a gas to be pumped between a suction inlet (4, 5) and a delivery outlet (6), **characterized in that** it has at least one stator (2) according to one of the preceding claims.

8. Manufacturing method (100) for a stator (2) of a dry vacuum pump (1), **characterized in that** it has the following steps:
- first, forming a stator insert (15) containing at least 10% nickel (step 101),
- then, casting onto the stator insert (15) an outer part of the stator (14) made of cast iron containing less than 5% nickel (step 102).

9. Rotary shaft (8, 9) for a dry vacuum pump (1) having at least one stator (2) and at least two rotors (10, 11) capable of rotating in a synchronized manner in opposite directions in the stator (2) to drive a gas to be pumped between a suction inlet (4, 5) and a delivery outlet (6), the rotary shaft (8, 9) being configured to bear and drive in rotation at least one rotor (10, 11), **characterized in that** the rotary shaft (8, 9) has:
- a shaft insert (17) made of cast iron containing less than 5% nickel, and
- an outer shaft part (18) intended to bear at least one rotor (10, 11) of the vacuum pump (1), the outer shaft part (18) containing at least 10% nickel,
- the shaft insert (17) having been cast in the outer shaft part (18).

10. Rotary shaft (8, 9) according to the preceding claim, **characterized in that** the outer shaft part (18) radially surrounds the shaft insert (17).

11. Rotary shaft(8, 9) according to either of Claims 9 and 10, **characterized in that** the outer shaft part (18) is an alloy, such as a cast iron, such as a spheroidal graphite cast iron, containing at least 10% nickel, such as containing at least 30% nickel.

12. Rotary shaft (8, 9) according to one of Claims 9 to 11, **characterized in that** the outer shaft part (18) is made of nickel.

13. Rotary shaft (8, 9) according to one of Claims 9 to 12, **characterized in that** the shaft insert (17) is made of cast iron, such as spheroidal graphite cast iron.

14. Dry vacuum pump (1) having at least one pumping stage (1a, 1b, 1c, 1d, 1e) to drive a gas to be pumped between a suction inlet (4, 5) and a delivery outlet (6), **characterized in that** it has at least one rotating shaft (8, 9) according to one of Claims 9 to 13.
